# EUROPEAN PATENT SPECIFICATION

(11) **EP 0 490 451 B1**
(45) Date of publication and mention of the grant of the patent: **28.02.1996**
(21) Application number: 91203245.5
(22) Date of filing: 10.12.1991
(51) Int. Cl.: C08F 4/647, C08F 10/06

(54) **Process for the production of polypropylene**
Verfahren zur Herstellung von Polypropylen
Procédé de préparation de polypropylène

(30) Priority: 12.12.1990 US 626523
(43) Date of publication of application: 17.06.1992
(73) Proprietor: SHELL INTERNATIONALE RESEARCH MAATSCHAPPIJ B.V., NL-2596 HR Den Haag (NL)
(72) Inventor: Rebhan, David Merrill, Kanawha County, West Virginia 25314 (US); Andréa, Ronald René, NL-1031 CM Amsterdam (NL)

(56) References cited:
- EP-A- 0 155 716
- EP-A- 0 341 723
- US-A- 4 250 287

## Description

This invention relates to a process for the production of polypropylene with a variation of a catalyst system adapted for such a polymerization comprising a solid titanium-based catalyst containing an inside electron donor, a hydrocarbyl aluminium cocatalyst, and a selectivity control agent.

For catalyst systems of the type described above, there exist too basic relationships by which much of their chemistry can be explained, i.e. (i) catalyst productivity vs. the aluminum/titanium atomic ratio and (ii) catalyst productivity vs. selectivity (as measured by percent xylene solubles). The catalyst productivity increases precipitously as the aluminum/titanium atomic ratio increases up to 35:1 to 40:1. Above this ratio, productivity increases much more slowly. This region is referred to as the productivity plateau. Normal operating procedure is to add just enough hydrocarbyl aluminium compound to reach the productivity plateau, i.e. 40:1. At this concentration, productivity is maximized and residual catalyst components in the resin are minimized. With regard to selectivity, adding more selectivity control agent causes one to move towards lower xylene solubles and lower catalyst productivity. Adding less selectivity control agent causes one to move towards higher xylene solubles and higher catalyst productivity. As the xylene solubles decrease from higher values toward lower ones, catalyst productivity decreases slowly. As the xylene solubles decrease even more, there is a point at which catalyst productivity falls off dramatically. In this region, control of the reaction is difficult and catalyst productivity very quickly becomes unacceptable. The maximum productivity and minimum xylene solubles (or maximum isotacticity) of a catalyst system, then, is defined by these relationships.

Thus, one of the problems faced by workers in this field is to make improvements in the maximum productivity and isotacticity obtainable for a given catalyst system. Furthermore, it is desirable to increase catalyst productivity over the range of normal xylene solubles operation.

EP-A-0,341,723 describes a copolymerization process of propylene and ethylene with a catalyst system comprising a solid catalyst precursor which includes magnesium, titanium and halogen and an ester, a hydrocarbyl aluminium cocatalyst and a mono- or polycarboxylic acid ester as a selectivity control agent.

This catalyst system lacks a silane compound which allows an optimisation of the copolymerization process.

EP-A-0,155,716 describes a polymerization catalyst system comprising a catalyst precursor, a cocatalyst and a mixture of compounds as selectivity control agent.

The mixture comprises aromatic esters and ethers or tertiary amines. Examples show that the xylene solubles limit is comparable when the mixture or only the ester is used as selectivity control agent.

US-A-4,250,287 discloses a similar catalyst system in which as activator a halosilane is being used. The specification, however, is silent about the maximization of productivity and isotacticity or the extension of the xylene solubles limit.

An object of this invention, therefore, is to provide a process for the production of polypropylene in which productivity and isotacticity are maximized, and the lower xylene solubles limit is extended.

The above object is met by a process for the polymerization of propylene or a mixture comprising propylene and one or more alpha-olefins comprising contacting the propylene or the mixture of olefins, under polymerization conditions, with a catalyst system comprising (i) a solid catalyst precursor, which includes magnesium; titanium; and halogen; and a C₁ to C₆ alkyl ester of an aromatic monocarboxylic or dicarboxylic acid; (ii) a trialkyl aluminium cocatalyst; and (iii) a mixture of selectivity control agents comprising a C₁ to C₆ alkyl ester of an aromatic monocarboxylic or dicarboxylic acid; and a silane compound containing at least one alkyl group and at least one alkoxy group, with the proviso that (a) the atomic ratio of aluminium to titanium is in the range of 10 to 200; and (b) the molar ratio of the ester to silicon compound in the mixture of selectivity control agents (iii) is from 1.5:1 to 50:1.

The catalyst system is made up of a solid catalyst precursor, which includes magnesium, titanium, a halogen, e.g. chlorine, and an electron donor; a cocatalyst; and a mixture of defined selectivity control agents. A selectivity control agent is defined as an additive, which modifies the catalyst precursor in such a manner as to increase the overall percentage of isotactic crystalline polymer produced.

Descriptions of solid catalyst precursors of this type can be found in United States patents 4,414,132; 4,535,068; and 4,657,995. In these cases, the solid catalyst precursor is obtained by halogenating a magnesium compound having the formula MgR₂₋ₙXₙ, wherein R is an alkoxide or an aryloxide group, each R being the same or different, X is a halogen (chlorine, benzene, or iodine), and n = 0 or 1 with a tetravalent titanium halide in the presence of a halohydrocarbon and an electron donor; contacting the halogenated product with a tetravalent titanium halide; optionally treating the resulting solid with an aromatic acid halide; washing the halogenated product to remove unreacted titanium compounds; and recovering the solid product.

The atomic or molar ratios of catalyst components can be about as follows:

| Ratio | Broad Range | Preferred Range |
|---|---|---|
| Mg to Ti | 1:1 to 50:1 | 3:1 to 30:1 |
| Cl to Mg | 1:1 to 5:1 | 2:1 to 3:1 |
| Mg to inside electron donor | 0.1:1 to 100:1 | 1:1 to 60:1 |
| Al to Ti | 10:1 to 200:1 | 20:1 to 100:1 |
| Al to total selectivity control agent (SCA) | 0.5:1 to 5:1 | 1:1 to 3:1 |
| SCA ester to SCA silicon | 1.5 to 50:1 | 2.1 to 20:1 |

Suitable halogen containing magnesium compounds that can be used to prepare the catalyst precursor are alkoxy and aryloxy magnesium halides such as isobutoxy magnesium chloride, ethoxy magnesium bromide, phenoxy magnesium iodide, cumyloxy magnesium bromie, and naphthenoxy magnesium chloride.

Magnesium compounds which can be used are magnesium dialkoxides, diaryloxides, and carboxylates having 2 to 24 carbon atoms such as magnesium di-iso-propoxide, magnesium diethoxide, magnesium dibutoxide, magnesium diphenoxide, magnesium dinaphthenoxide, and ethoxy magnesium isobutoxide, magnesium dioctanoate, and magnesium dipropionate.

Suitable halides of tetravalent titanium include aryloxy- or alkoxy di- and -trihalides, such as dihexoxy titanium dichloride, diethoxy titanium dibromide, isopropoxy titanium triiodide, and phenoxy titanium trichloride. Titanium tetrahalides, such as titanium tetrachloride, are preferred.

The halohydrocarbons when employed can be aromatic or aliphatic. Each aliphatic halohydrocarbon preferably contains from 1 to 12 carbon atoms and at least 2 halogen atoms. The aliphatic halohydrocarbons include dibromomethane, trichloromethane, 1,2-dichloroethane, dichlorobutane, 1,1,3-trichloroethane, trichloropropane, carbon tetrachloride and 1,1,3-trichloroethane. Aliphatic halohydrocarbons containing only one halogen atom per molecule, such as butyl chloride and amyl chloride, can also be employed. Suitable aromatic halohydrocarbons include chlorobenzene, bromobenzene, dichlorobenzene, dichloridibromobenzene, naphthyl chloride, chlorotoluene, and dichlorotoluene. Chlorobenzene is the most preferred halohydrocarbon.

Examples of the monocarboxylic acid ester, which can be used in the Mg/Ti complex as the inside electron donor or as a selectivity control agent (outside electron donor), are as follows: ethyl and methyl benzoate, p-methoxy ethyl benzoate, p-ethoxy methyl benzoate, p-ethoxy ethyl benzoate, p-chloro ethyl benzoate, p-amino hexyl benzoate, isopropyl naphthenate, and n-amyl toluate.

Suitable dicarboxylic acid esters, which can be used as the inside electron donor or as a selectivity control agent, are compounds like dimethyl phthalate, diethyl phthalate, di-n-propyl phthalate, diisopropyl phthalate, di-n-butyl phthalate, diisobutyl phthalate, di-tert-butyl phthalate and diisoamyl phthalate.

Examples of suitable trialkyl aluminium cocatalysts are: triisobutylaluminium, trihexylaluminium, di-isobutylhexylaluminium, isobutyl dihexylaluminium, trimethylaluminium, triethylaluminium, tripropylaluminium, triisopropylaluminium, tri-n-butylaluminium and trioctylaluminium. The preferred hydrocarbyl aluminiums are triethylaluminium, triisobutylaluminium and trihexylaluminium.

As noted, a mixture of selectivity control agents is used in the process of this invention.

One of the selectivity control agents is C₁ to C₆ alkyl ester of an aromatic mono- or dicarboxylic acid ester described above. The other selectivity control agent is a silicon compound containing at least one alkyl group and at least one alkoxy group. Examples of useful silicon compounds are n-propyltrimethoxysilane, di-tert-butyldimethoxysilane, diphenyldiisobutoxysilane, diisobutyldimethoxysilane, dimethyldiethoxysilane, ethyltriethoxysilane, tetraethoxysilane, diethyldiethoxysilane, cyclohexylmethyldimethoxysilane, cyclohexyltrimethoxysilane, and t-butyltrimethoxysilane.

It is understood that more than one of each component of the described catalyst system can be used, if desired. Unhindered inside electron donors and selectivity control agents are preferred.

Preferably, the mixture of selectivity control agents comprises para-ethylethoxy benzoate and a dialkyl dialkoxysilane or an alkyltrialkoxysilane.

The molar ratio of the components of the selectivity control agent mixture is important to the process of the invention. As noted above, the molar ratio of carboxylic acid ester to silicon compound should, therefore, be from 1.5:1 to 50:1.

The preferred molar ratio is from 2:1 to 20:1.

A modifier can be used in the catalyst system, if desired. The modifier has the formula BX₃ or A1R₍₃₋ₐ₎Xₐ, wherein X is chlorine, bromine, or iodine; R is an alkyl radical having 1 to 14 carbon atoms; each X and R are the same or different; and a is 0, 1, or 2. Preferred modifiers include alkylaluminium mono- and dichlorides wherein each alkyl radical has 1 to 6 carbon atoms, and boron trichloride. A particularly preferred modifier is diethyl aluminium chloride. From 0.1 to 10 moles, and preferably from 0.2 to 2.5 moles, of modifier are used per mole of inside electron donor. When the modifier is used it is considered to be part of the titanium complex.

The polymerization process of this invention can be carried out in the gas phsae or the liquid phase. A homopolymer of propylene, or a copolymer of propylene based on two or more comonomers, can be prepared in either manner. In addition to the propylene, the comonomers can be alpha-olefins having 2 or 4 to 12 carbon atoms possibly in admixture with conjugated dienes containing 4 to 25 carbon atoms. Useful alpha-olefins preferably do not contain any branching on carbon atoms closer than two carbon atoms removed from the double bond. Examples of suitable alpha-olefins include ethylene, 1-butene, 1-hexene, 4-methylpentene-1, 1-heptene, and 1-octene. Examples of the dienes are 1,4-pentadiene, 1,4-hexadiene, 1,5-hexadiene, dicyclopentadiene, cyclohexadiene, 1-vinyl-1-cyclopentene, and the alkylbicyclononadienes, indenes, and norbornenes. Ethylidene norbornene is an example of the latter. The non-conjugated dienes are preferred.

With regard to the gas phase, the polymers can be prepared in one or more fluidized bed reactors such as that described in United States Patent 4,482,687 or in other conventional gas phase reactors.

The fluidized bed, or other gas phase, reactor can be operated at a temperature in the range of from 50 °C to 150 °C and is preferably operated at a temperature in the range of from 60 °C to 90 °C. The operating pressure is in the range of from 1400 kPa to 4600 kPa.

Hydrogen or another chain transfer agent can be used as molecular weight control agent. The molar ratio of hydrogen to propylene when used in the fluidized bed reactor can be in the range of from 0.0005:1 to 0.2:1 and is preferably in the range of from 0.01:1 to 0.1:1.

A typical liquid phase process can be described as follows: Normal operating temperatures are in the range of from 10 °C to 80 °C, and the liquid phase process is preferably operated at a temperature in the range of from 40 °C to 70 °C. The operating pressure is determined by the vapour pressure of propylene at the operating temperature.

The advantages of the process of the invention are low residual amount, e.g. of para-ethoxy ethyl benzoate in the resin, thus reducing its odour; higher productivity resulting in reduced ash levels and lower xylene solubles, i.e. higher isotacticity. The invention allows for enlargement of the practical process operating region, i.e. the lower xylene solubles limit is extended.

In a preferred embodiment of the process of this invention use is made of a catalyst system comprising (i) a solid catalyst precursor, having the formula TiCl₄.aMgCl₂.bC₆H₅COOC₂H₅, (ii) a trialkyl aluminium cocatalyst; and (iii) a para-ethoxyethyl benzoate and a dialkyldialkoxysilane or an alkyltrialkoxysilane, in which a is a number of from 8 to 15 and b is a number of from 0.8 to 4. In said formula TiCl₃OR may be substituted for TiCl₄, in that event OR preferably represents a 3-methoxyphenoxy group.

The invention is illustrated by the following examples.

### Examples 1 to 7

A prepared solid catalyst precursor having the following approximate composition:

TiCl₄.12 MgCl₂.2 C₆H₅COOC₂H₅,

premixed in a mix tank, is continuously fed into a fluidized bed reactor as a 30 percent by weight dispersion in mineral oil. Simultaneously, and continuously, triethylaluminium cocatalyst (TEA) as a solution in isopentane; para-ethoxy ethyl benzoate (PEEB) as a solution in isopentane; and diisobutyldimethoxysilane (DIBDMS) as a 1.0 percent by weight solution in isopentane are also added to the reactor.

Sufficient solid catalyst component, cocatalyst, and selectivity control agents (PEEB and DIBDMS) are introduced into the reactor to maintain the molar ratio of aluminium to total selectivity control agent (SCA); TEA to titanium; and of PEEB to DIBDMS.

Propylene, hydrogen, and nitrogen are added to maintain a specified total pressure. The total pressure and partial pressure of propylene are mentioned in the Table as well as the hydrogen/propylene molar ratio. The balance of the total pressure is made up with nitrogen. The catalyst feed is accomplished through the use of a syringe continuous feeder. The average residence time, based on titanium analysis of the polypropylene resin, is 2.5 hours. The resin product is transferred from the fluidized bed to a receiving drum continuously purged with humidified nitrogen so that the contained moisture can deactivate the catalyst components in the resin to reduce odour.

The reactor is a pilot scale model, 35 cm in diameter and 8.4 m in height. It is operated in the condensing mode. Condensing mode operation is described in United States Patents 4,543,399 and 4,588,790 wherein the recycle gas stream is cooled to a temperature at or below the dew point of the recycle gas stream to produce a two-phase gas/liquid mixture under conditions such that the liquid phase of said mixture will remain entrained at least from the point of entry until it passes into the fluidized bed.

In order to compare the observed productivities, the results are normalized to an average residence time of 3 hours using an experimentally determined catalyst decay constant. The results are also normalized to 2560 kPa propylene by assuming that the polymerization is first order in propylene. Furthermore, the observed productivities are normalized to a constant xylene soluble level. Productivities normalized in this way can be used to show productivity increases as a function of SCA composition.

Standard conditions are:

| | |
|---|---|
| resin bed height | 36 kg |
| propylene partial pressure | 2520 kPa |
| recycle gas velocity | 0.3 m.sec⁻¹ |
| reactor temperature | 65 °C |
| reactor pressure | 2975 kPa. |

Variable conditions and results are set forth in Table I.

### Examples 8 and 9

Example 1 is repeated except that 0.5 weight percent normal-propyltrimethoxysilane (NPTMS) is substituted for the DIBDMS.

Variable conditions and results are set forth in Table II.

### Examples 10 and 11

Example 1 is repeated except that 2 weight percent ethyltriethoxysilane (ETES) is substituted for the DIBDMS.

Variable conditions and results are set forth in Table III.

### Examples 12 to 18

Two different procatalysts (A and B) were prepared using magnesium di(3-methoxyphenoxide) of good morphology as starting material. To produce procatalyst A a liquid phase was prepared of 0.61 ml ethylbenzoate (molar ratio to Mg compound 0.17:1) in 75 ml of a 36.6:63.4 vol:vol mixture of TiCl₄ and monochlorobenzene. The liquid phase was heated to 80 °C. Then 6.76 g (25 mmol, Ti/Mg atomic ratio 10:1) of magnesium di(3-methoxyphenoxide) were added and the suspension was reacted at 100 °C for one hour. The solid procatalyst was isolated by filtration and repeatedly washed with isooctane.

The same procedure was followed to prepare procatalyst B except that the 75 ml mixture now comprised TiCl₄ and monochlorobenzene in a 18.3:81.7 vol:vol ratio (Ti/Mg atomic ratio 5:1).

Propylene was polymerized in a liquid bulk process under the following conditions: T 67 °C, time 1 hr, pressure 7000 kPa, TEA/Ti molar ratio 80:1, DEAC/Ti molar ratio 20:1, TEA/PEEB ratio 1.8:1, H₂ concentration 1 to 1.5% vol in gas cap (TEA = triethyl aluminium, DEAC = diethyl aluminium chloride, PEEB = p.ethoxy ethyl benzoate), PEEB/SCA ratio 0.75:1 (SCA = solubles control agent, being either IBTMS (isobutyl trimethoxy silane), or DIBDMS (diisobutyl dimethoxy silane) or NPTMS (n-propyl trimethoxy silane)).

The results are shown in Table IV.

These results, particularly those shown in Table IV, clearly show that there can be marked improvements in polymer yield and xylene solubles levels or in both. In addition it follows from the attractive high bulk density levels that in the procatalyst the attractive morphology of the magnesium compound starting material is completely retained. As a third important improvement is noted that the relevant procatalyst/TEA/PEEB/silanes catalyst system leads to obtaining a polymer with a narrowed molecular weight distribution as follows from the cross-over modulus (Gc) data. Best results are obtained with PEEB/NPTMS, giving an increase in Gc of from 20.6 kPa (PEEB only) to 23.4 kPa.

Lastly, the balance of extremely high polymer yield 59 kg/g/hr combined with excellent polymer morphology (0.40 g/ml) and superior xylene solubles level of 3.3% wt shows the exceptional, stunning performance of the procatalyst A/TEA/PEEB/DIBDMS combination.
Notes to Tables:
1. TEA = triethylaluminium
   DIBDMS = diisobutyldimethoxysilane
   NPTMS = normal-propyltrimethoxysilane
   ETES = ethyltriethoxysilane
   PEEB = para-ethoxy ethyl benzoate
   SCA = selectivity control agent
2. Examples 1 to 7 use a solution of 2.5 weight % TEA in isopentane and of 2.5 weight % PEEB in isopentane. Examples 8 to 11 use a solution of 5 weight % TEA in isopentane and 2.5 weight % PEEB in isopentane.
3. Catalyst productivity is the kilograms of resin produced per gram of catalyst. The productivity is normalized to 3 hours average residence time and 2560 kPa propylene. The catalyst productivity is further normalized for xylene solubles differences, i.e. it estimates productivity at 4% xylene solubles. The calculation is as follows:$\text{Catalyst productivity =} \frac{\text{28}}{\text{Ti}} \text{+ [12.78 - (} \frac{\text{32.5}}{\text{0.042}} \text{+} \frac{\text{10}}{\text{%XS}} \text{)]}$
4. Melt flow is determined under ASTM D-1238, Condition L, measured at 230 °C with a 2160 gram load; and reported as grams per 10 minutes.
5. Ti(ppm) = the parts of titanium per million parts of resin. The ppm of titanium are determined by the spectrophotometric method.
6. Xylene solubles are the percent by weight of resin that stays in the solution after the resin sample is dissolved in hot xylene and the solution is allowed to cool to 23 °C.
7. Normalized Ti(ppm) is normalized to 3 hours average residence time and 360 psi propylene. It is calculated by assuming that the fluid bed behaves kinetically as a CSTR and that the polymerization kinetics are first order in propylene with a deactivation constant of 2.5 hour⁻¹.

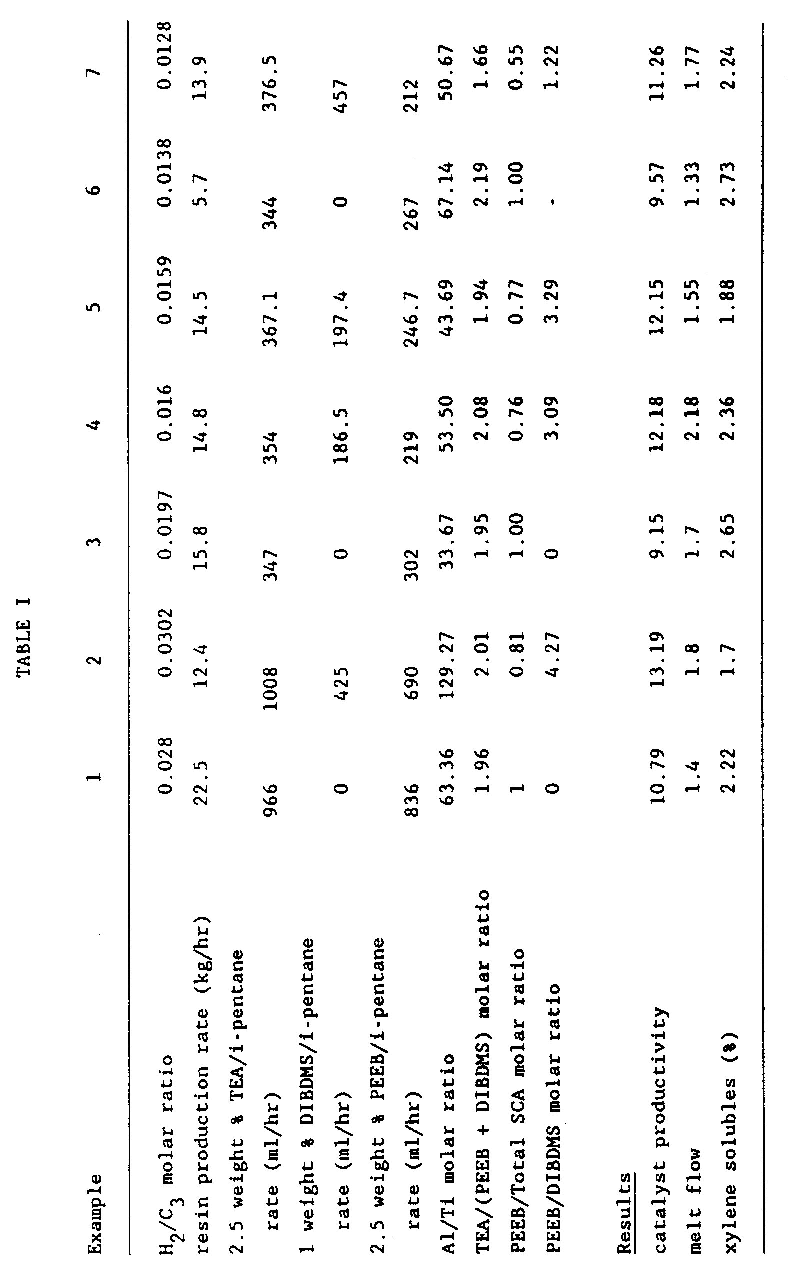

**TABLE II**

| Example | 8 | 9 |
|---|---|---|
| H₂/C₃ molar ratio | 0.0159 | 0.0179 |
| residence time (hrs) | 2.46 | 3.05 |
| 5 weight % TEA/i-pentane rate (ml/hr) | 91.6 | 107 |
| 0.5 weight % NPTMS/i-pentane rate (ml/hr) | 0 | 66.6 |
| 2.5 weight % PEEB/i-pentane rate (ml/hr) | 159.5 | 190 |
| Al/Ti molar ratio | 47.31 | 51.24 |
| TEA/(PEEB + NPTMS) molar ratio | 1.95 | 1.77 |
| PEEB/Total SCA molar ratio | 1.00 | 0.92 |
| PEEB/NPTMS molar ratio | - | 12.11 |

| Results | | |
|---|---|---|
| catalyst productivity | 6.37 | 11.07 |
| melt flow | 3.83 | 4.8 |
| xylene solubles (%) | 5.73 | 3.16 |

**TABLE III**

| Example | 10 | 11 |
|---|---|---|
| H₂/C₃ molar ratio | 0.03205 | 0.0328 |
| residence time (hrs) | 2.32 | 2.9 |
| 5 weight % TEA/i-pentane rate (ml/hr) | 279 | 249 |
| 2 weight % ETES/i-pentane rate (ml/hr) | 0 | 31 |
| 2.5 weight % PEEB/i-pentane rate (ml/hr) | 452 | 398 |
| Al/Ti molar ratio | 69 | 58 |
| TEA/(PEEB + ETES) molar ratio | 2.10 | 2.00 |
| PEEB/Total SCA molar ratio | 1.0 | 0.94 |
| PEEB/ETES molar ratio | - | 15.9 |

| Results | | |
|---|---|---|
| catalyst productivity | 12.68 | 13.67 |
| melt flow | 2.6 | 3.1 |
| xylene solubles (%) | 2.83 | 1.8 |

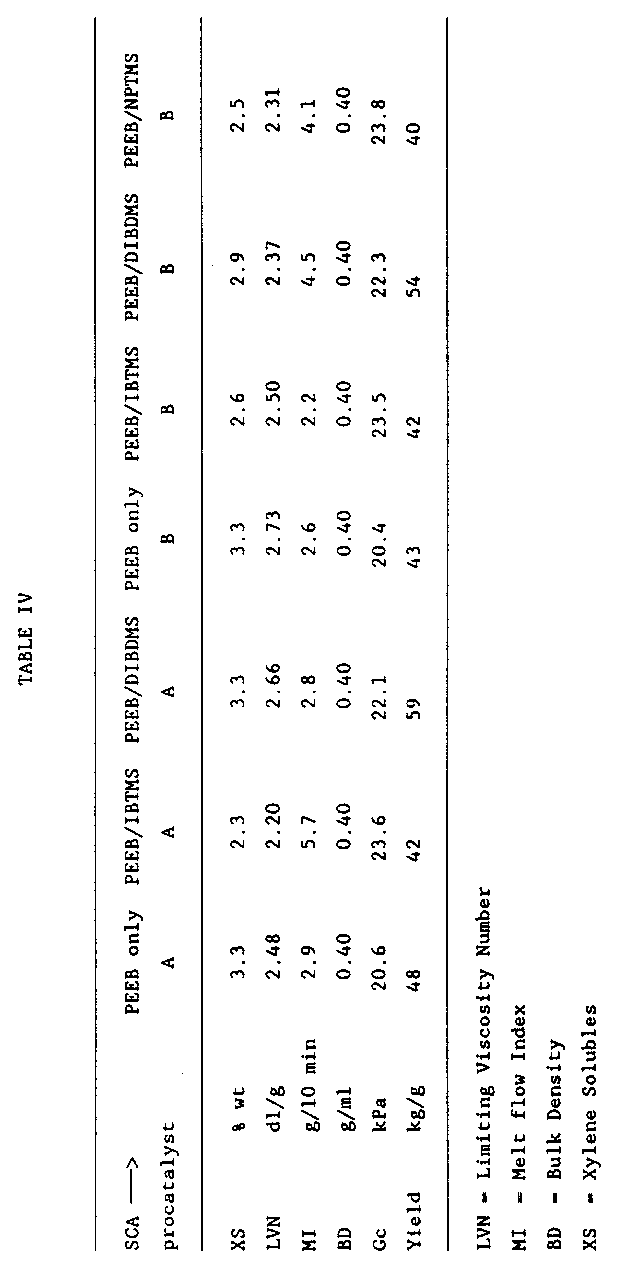

## Claims

1. A process for the polymerization of propylene or a mixture comprising propylene and one or more alpha-olefins comprising contacting the propylene or the mixture of olefins, under polymerization conditions, with a catalyst system comprising (i) a solid catalyst precursor, which includes magnesium; titanium; and halogen; and a C₁ to C₆ alkyl ester of an aromatic monocarboxylic or dicarboxylic acid; (ii) a trialkyl aluminium cocatalyst; and (iii) a mixture of selectivity control agents comprising a C₁ to C₆ alkyl ester of an aromatic monocarboxylic or dicarboxylic acid and a silane compound containing at least one alkyl group and at least one alkoxy group, with the proviso that (a) the atomic ratio of aluminium to titanium is in the range of 10 to 200; and (b) the molar ratio of the ester to silicon compound in the mixture of selectivity control agents (iii) is from 1.5:1 to 50:1.

2. The process as claimed in claim 1 wherein the molar ratio of ester to silicon compound in the mixture of selectivity control agents (iii) is in the range of from 2:1 to 20:1.

3. The process as claimed in claim 1 or 2 wherein the mixture of selectivity control agents comprises para-ethoxyethyl benzoate and a dialkyldialkoxysilane or an alkyltrialkoxysilane.

4. A process as claimed in any one of claims 1 to 3 in which the catalyst system comprises (i) a solid catalyst precursor, having the formula TiCl₄.aMgCl₂.bC₆H₅COOC₂H₅, (ii) a trialkyl aluminium cocatalyst; and (iii) a para-ethoxyethyl benzoate and a dialkyldialkoxysilane or an alkyltrialkoxysilane, in which a is a number of from 8 to 15 and b is a number of from 0.8 to 4.

5. The process as claimed in claim 4 wherein the silane is diisobutyldimethoxysilane or n-propyltrimethoxysilane.

6. The process as claimed in claim 4 in which the compound TiCl₃OR is substituted for TiCl₄, OR representing a 3-methoxyphenoxy group.

## Patentansprüche

1. Verfahren zur Polymerisation von Propylen oder einer Mischung aus Propylen und einem oder mehreren Alpha-Olefinen, bei dem man das Propylen oder die Olefinmischung unter Polymerisationsbedingungen mit einem Katalysatorsystem, das aus (i) einem festen Katalysatorvorläufer, der Magnesium, Titan und Halogen und einen C₁- bis C₆-Alkylester einer aromatischen Mono- oder Dicarbonsäure enthält, (ii) einem Trialkylaluminium-Cokatalysator und (iii) einer Mischung von Selektivitätssteuermitteln, die einen C₁- bis C₆-Alkylester einer aromatischen Mono- oder Dicarbonsäure und eine Siliziumverbindung mit mindestens einer Alkylgruppe und mindestens einer Alkoxygruppe enthält, besteht, unter der Voraussetzung, daß (a) das atomare Verhältnis vom Aluminium zum Titan im Bereich von 10 bis 200 liegt und (b) das Molverhältnis des Esters zur Siliziumverbindung in der Mischung der Selektivitätssteuermittel (iii) zwischen 1,5:1 und 50:1 beträgt, kontaktiert.

2. Verfahren nach Anspruch 1, bei dem das Molverhältnis des Esters zur Siliziumverbindung in der Mischung der Selektivitätssteuermittel (iii) im Bereich von 2:1 bis 20:1 liegt.

3. Verfahren nach Anspruch 1 oder 2, bei dem die Mischung der Selektivitätssteuermittel para-Ethoxybenzoesäureethylester und ein Dialkyldialkoxysilan oder ein Alkyltrialkoxysilan enthält.

4. Verfahren nach einem der Ansprüche 1 bis 3, bei dem das Katalysatorsystem aus (i) einem festen Katalysatorvorläufer der Formel TiCl₄.aMgCl₂.bC₆H₅COOC₂H₅, (ii) einem Trialkylaluminium-Cokatalysator und (iii) einem para-Ethoxybenzoesäureethylester und einem Dialkyldialkoxysilan oder einem Alkyltrialkoxysilan besteht, wobei a eine Zahl zwischen 8 und 15 und b eine Zahl zwischen 0,8 und 4 darstellt.

5. Verfahren nach Anspruch 4, bei dem das Silan Diisobutyldimethoxysilan oder n-Propyltrimethoxysilan ist.

6. Verfahren nach Anspruch 4, bei dem TiCl₄ durch die Verbindung TiCl₃OR ersetzt ist, wobei OR eine 3-Methoxyphenoxygruppe bedeutet.

## Revendications

1. Procédé de polymérisation du propylène, ou d'un mélange comprenant du propylène et une ou plusieurs α-oléfines, caractérisé en ce que l'on met le propylène ou le mélange d'oléfines en contact, dans des conditions de polymérisation, avec un système catalytique qui comprend (i) un précurseur de catalyseur solide, qui englobe le magnésium, le titane et les halogènes et un ester alkylique en C₁ à C₆ d'un acide monocarboxylique ou dicarboxylique, aromatique, (ii) un cocatalyseur du type trialkylaluminium et (iii) un mélange d'agents de réglage de la sélectivité, comprenant un ester alkylique en C₁ à C₆ d'un acide monocarboxylique ou dicarboxylique, aromatique et un composé du type silane contenant au moins un radical alkyle et au moins un radical alcoxy, avec la condition que (a) le rapport atomique de l'aluminium au titane fluctue de 10 à 200 et (b) le rapport molaire de l'ester au composé du silicium dans le mélange d'agents de réglage de la sélectivité (iii) varie de 1,5:1 à 50:1.

2. Procédé suivant la revendication 1, caractérisé en ce que le rapport molaire de l'ester au composé du silicium dans le mélange d'agents de réglage de la sélectivité (iii) varie de 2:1 à 20:1.

3. Procédé suivant la revendication 1 ou 2, caractérisé en ce que le mélange d'agents de réglage de la sélectivité est constitué de benzoate de para-éthoxyéthyle et d'un dialkyldialcoxysilane ou d'un alkyltrialcoxysilane.

4. Procédé suivant l'une quelconque des revendications 1 à 3, caractérisé en ce que le système catalytique comprend (i) un précurseur de catalyseur solide, répondant à la formule TiCl₄.aMgCl₂.bC₆H₅COOC₂H₅, (ii) un cocatalyseur du type trialkylaluminium et (iii) un benzoate de para-éthoxyéthyle et un dialkyldialcoxysilane ou un alkyltrialcoxysilane, dans lequel a est un nombre dont la valeur varie de 8 à 15 et b est un nombre dont la valeur varie de 0,8 à 4.

5. Procédé suivant la revendication 4, caractérisé en ce que le silane est le diisobutyldiméthoxysilane ou le n-propyltriméthoxysilane.

6. Procédé suivant la revendication 4, caractérisé en ce que l'on substitue le composé de la formule TiCl₃OR au TiCl₄, OR représentant le radical 3-méthoxyphénoxy.
